# EUROPEAN PATENT APPLICATION

(11) **EP 4 718 437 A1**
(43) Date of publication of application: **01.04.2026**
(21) Application number: 24203717.4
(22) Date of filing: 30.09.2024
(51) Int. Cl.: G10K 11/162

(54) **SUSTAINABLE ACOUSTIC DAMPING MATERIAL**

(71) Applicant: Sika Technology AG, 6340 Baar (CH)
(72) Inventor: BECKENSTRÄTER, Hanna, 60388 Frankfurt am Main (DE); WITT, Robert, 60388 Frankfurt am Main (DE); CELIK, Nazan, 60388 Frankfurt am Main (DE); SCHWAB, Frederick, 60388 Frankfurt am Main (DE); SPENGLER, Jan, 60388 Frankfurt am Main (DE); VIDOVIC, Marko, 60388 Frankfurt am Main (DE)
(74) Representative: Sika Patent Attorneys

(57) **Abstract**

The invention relates to an acoustic damping material comprising:
a) At least one thermoplastic polymer TP,
b) At least one plasticizer PL,
c) At least one tackifying resin TR,
d) At least one wax W ,
e) At least 15 wt.-%, preferably at least 25 wt.-% of at least one solid particulate filler F,
wherein the at least one plasticizer PL comprises at least one bio-based plasticizer and/or the at least one tackifying resin TR comprises at least one bio-based tackifying resin and/or the at least one wax W comprises at least one bio-based wax.

## Description

### Technical field

The present invention relates acoustic damping materials and use thereof for damping of vibrations and noise of components and structures in manufactured articles, such as transportation vehicles and articles of home appliance and general industry. Particularly the invention relates to sustainable acoustic damping materials comprising bio-based components.

### Background of the invention

Acoustic damping materials are widely used in automotive, home appliance, and general industries for reducing undesired vibrations, structure borne noise, and air borne noise. For example, in automotive vehicles, it is desirable to prevent transfer of vibrations generated by the motors, pumps, gears and other dynamic force generators through the body of the vehicle into the passenger compartment. Structure borne noise is produced when the vibrations generated by a dynamic force generator are transmitted through a supporting structure, typically a frame or other hollow structure, to a noise emitting surface, such as a metallic or plastic panel, which transforms the mechanical vibrations into sound waves. Structure borne noise and vibrations in general can be effectively reduced by application of vibration damping materials directly to the structures and surfaces of components subjected to vibrational disturbances, such as to surfaces of vehicle panels, floors, and to shells of articles of home appliance and general industry, such as machines, washers, and dryers.

Acoustic damping materials used for damping of vibrating surfaces are commonly provided as pre-formed single- and multi-layer elements or as liquid compositions, which are applied directly on surface of a substrate. Pre-formed damping elements typically comprise a layer of damping material, which is in direct contact with a surface of the substrate to be damped against vibrational disturbances. The layer of damping material is capable of dissipating kinetic energy of the vibrating surface into heat energy through extension and compression of the material of the damping layer. Such damping elements can further comprise an adhesive layer, such as a layer of a pressure sensitive adhesive or a hot-melt adhesive, to enable bonding of the damping element to a surface of a substrate. Liquid applied damping systems are typically thermally drying, gelling, or reactive compositions, which are applied on the surface of the substrate in liquid state, for example by spraying.

Commonly used damping materials include highly filled compositions comprising bitumen, elastomers, or thermoplastic polymers and varying amounts of additives, such as plasticizers, processing aids, rheology modifiers, and drying agents. Fillers are added to these compositions to meet different design goals. Some of the fillers are used to improve the acoustic damping properties, whereas other fillers are used to reduce the density of the material or to replace more expensive materials in order to reduce costs of raw materials. Typical fillers used in acoustic damping materials include, particularly, mineral fillers, such as calcium carbonate. Light weight mineral fillers, such as hollow ceramic spheres and hollow glass spheres have been widely used to reduce the density of the acoustic damping material and eventually to reduce the weight of the acoustic damping element.

Almost all constituents of acoustic damping materials of prior art have a relatively high CO₂ footprint due to the petroleum based origin of the raw materials and energy intensive production process. Especially the main components of acoustic damping materials, including synthetic polymers, bitumen, and fillers are commonly based on 100 % of non-renewable raw materials. It would generally be advantageous to replace most of the fossil-based raw materials with bio-based alternatives in the acoustic damping materials. However, such replacement should not result in deterioration of the application relevant properties.

There is thus a need for a new type of acoustic damping material, which can be used for damping of vibrations and noises of components and structures in manufactured articles, which material has a significantly lower CO₂ footprint compared to damping elements of prior art.

### Summary of the invention

The object of the present invention is to provide a sustainable acoustic damping material for use in damping elements, which are suitable for damping of undesired vibrations and noise in structures of manufactured articles.

Surprisingly, it has been found that the features of claim 1 achieve this object.

Particularly, it was surprisingly found out that many of the fossil-based components in a conventional acoustic damping material can be replaced with biomass-derived alternatives. Such modified acoustic damping materials were found to have significantly lower CO₂ footprint and similar or even improved acoustic damping properties compared to damping materials of prior art obtained using only fossil-based components.

Specifically, according to the invention, an acoustic damping material is provided, the material comprising:
a) At least one thermoplastic polymer **TP,**
b) At least one plasticizer **PL,**
c) At least one tackifying resin **TR,**
d) At least one wax **W,**
e) At least 15 wt.-%, preferably at least 25 wt.-% of at least one solid particulate filler **F,**
wherein the at least one plasticizer **PL** comprises at least one bio-based plasticizer and/or the at least one tackifying resin **TR** comprises at least one bio-based tackifying resin and/or the at least one wax **W** comprises at least one bio-based wax.

Other aspects of the present invention are presented in other independent claims. Preferred aspects of the invention are presented in the dependent claims.

### Brief description of the Drawings

Fig. 1 shows a cross-section of a damping element (1) comprising of a damping layer (2) and an adhesive layer (3).
Fig. 2 shows a cross-section of a damping element (1) comprising a damping layer (2), an adhesive layer (3), and a constraining layer (4).
Fig. 3 shows a cross-section of a vibration and/or noise damped system comprising a structure (5) having a noise emitting surface (6) and a damping element (1), wherein the damping layer (2) is bonded to the noise emitting surface (6) via the adhesive layer (3).

### Detailed description of the invention

The first aspect of the present invention is an acoustic damping material comprising:
a) At least one thermoplastic polymer **TP,**
b) At least one plasticizer **PL,**
c) At least one tackifying resin **TR,**
d) At least one wax **W,**
e) At least 15 wt.-%, preferably at least 25 wt.-% of at least one solid particulate filler **F,**
wherein the at least one plasticizer **PL** comprises at least one bio-based plasticizer and/or the at least one tackifying resin **TR** comprises at least one bio-based tackifying resin and/or the at least one wax **W** comprises at least one bio-based wax.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "molecular weight" refers to the molar mass (g/mol) of a molecule or a part of a molecule, also referred to as "moiety". The term "average molecular weight" refers to weight average molecular weight (Mₙ) of an oligomeric or polymeric mixture of molecules or moieties. The molecular weight can be determined by conventional methods, preferably by gel permeation-chromatography (GPC) using polystyrene as standard, styrenedivinylbenzene gel with porosity of 100 Angstrom, 1000 Angstrom and 10000 Angstrom as the column, and, depending on the molecule, tetrahydrofurane as a solvent, at 35 °C, or 1,2,4-trichlorobenzene as a solvent, at 160 °C.

The term "softening point" refers to a temperature at which compound softens in a rubberlike state, or a temperature at which the crystalline portion within the compound melts. The softening point is preferably determined by Ring and Ball measurement conducted according to EN 1238:2011 standard.

The term "melting temperature" refers to a temperature at which a material undergoes transition from the solid to the liquid state. The melting temperature (Tₘ) is preferably determined by differential scanning calorimetry (DSC) according to ISO 11357-3:2018 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The "amount or proportion or content of at least one compound X" in a composition, for example "the proportion of the at least one thermoplastic polymer TP" refers to the sum of the individual proportions of all thermoplastic polymers TP contained in the composition. For example, in case the composition comprises 20 wt.-% of at least one thermoplastic polymer TP, the sum of the amounts of all thermoplastic polymers TP contained in the composition equals 20 wt.-%.

Furthermore, the expression "the at least one component X comprises at least one compound", for example, "the at least one plasticizer PL comprises at least one bio-based plasticizer", is understood to mean that the composition comprises at least one bio-based plasticizer as representative(s) of the at least one plasticizer PL.

According to the invention, the acoustic damping material comprises at least one plasticizer **PL.**

Suitable plasticizers for use as the at least one plasticizer **PL** include, for example mineral oils, especially paraffinic and naphtenic oils containing relatively low amounts of aromatic moieties, synthetic oils, liquid polyolefin resins, vegetable oils, and chemically modified vegetable oils.

In embodiments, the at least one plasticizer **PL** comprises or consists of at least one bio-based plasticizer.

The term "bio-based" refers in the present disclosure to a material that is produced or is derived from at least 25 wt.-% of a renewable material.

Suitable bio-based plasticizers for use as the at least one plasticizer **PL** include, for example, bio-based process oils, technical grade vegetable oils, and chemically modified vegetable oils.

Preferably, the at least one bio-based plasticizer has a bio-based carbon content determined by the radiocarbon method according to ASTM D 6866-12 (Method B) of at least 60 wt.-%, preferably 60 - 100 wt.-%, more preferably 75 - 100 wt.-%, based on the total carbon content of the at least one bio-based plasticizer.

The Method B of the ASTM D 6866-12 utilizes Accelerator Mass Spectrometry (AMS) along with Isotope Ratio Mass Spectrometry (IRMS) techniques to quantify the biobased content of a given product. The ¹⁴C/¹²C and ¹³C/ ¹²C isotropic ratios are measured using ASM and determined relative to the appropriate primary reference material, i.e. SRM 4990c and RM 8544 for 14C and 13 C, respectively. Zero % ¹⁴C represents a fossil (e.g. petroleum based) carbon source.

Especially suitable plasticizers for use as the at least one plasticizer **PL** have a pour point determined according to EN ISO 3016 standard of at or below 0 °C, preferably at or below -5 °C, more preferably at or below -10 °C and/or a kinematic viscosity at 40 °C determined according to ISO 3104 of 10 - 1000 mm²/s, preferably 15 - 500 mm²/s, more preferably 20 - 250 mm²/s and/or a density at 15 °C determined according to DIN 51757 method 3 of 800 - 900 kg/m³, preferably 815 - 885 kg/m³, more preferably 820 - 875 kg/m³.

In embodiments, the at least one bio-based plasticizer has a pour point determined according to EN ISO 3016 standard of at or below 0 °C, preferably at or below -10 °C, more preferably at or below -20 °C and/or a kinematic viscosity at 40 °C determined according to ISO 3104 of 15 - 1000 mm²/s, preferably 30 - 500 mm²/s, more preferably 45 - 250 mm²/s and/or a density at 15 °C determined according to DIN 51757 method 3 of 800 - 900 kg/m³, preferably 815 - 875 kg/m³, more preferably 820 - 850 kg/m³.

In exemplary embodiments, the at least one bio-based plasticizer contains isoalkanes.

In the context of the present disclosure, the term "isoalkane" designates branched-chain alkanes, especially one having a methyl group attached to the penultimate carbon atom of the main chain. Particularly, an isoalkane does not contain a double bond or a cyclic substituent.

In embodiments, the at least one bio-based plasticizer contains at least one compound having a formula CₙH₂ₙ₊₂ or CₙH₂ₙ, where n has a value of 30 - 80, preferably 40 - 60.

Especially suitable bio-based plasticizers may have a weight average molecular weight (M_{w}) determined by gel permeation-chromatography (GPC) using polystyrene as standard of 200 - 10000 g/mol, preferably 300 - 5000 g/mol, more preferably 500 - 3500 g/mol.

Furthermore, the at least one bio-based plasticizer may be free of compounds with carboxyl groups, especially free of compounds with carbonyl groups. The term "free of" is understood to mean that the proportion of the respective compounds is not more than 0.5 wt.-%, preferably not more than 0.1 wt.-%, based on the total weight of the at least one bio-based plasticizer.

In embodiments, the at least one bio-based plasticizer comprises at least 75 wt.-%, preferably at least 85 wt.-%, more preferably at least 95 wt.-% of hydrocarbons, based on the total weight of the at least one bio-based plasticized. The term "hydrocarbon" refers in the context of the present disclosure to organic compounds consisting entirely of hydrogen and carbon.

Preferably, the acoustic damping material comprises not more than 50 wt.-%, more preferably not more than 35 wt.-% and/or at least 0.5 wt.-%, more preferably at least 1.5 wt.-%, of the at least one plasticizer **PL.**

In embodiments, the acoustic damping material comprises 0.5 - 20 wt.-%, preferably 1.5 - 15 wt.-%, more preferably 2.5 - 12.5 wt.-% of the at least one plasticizer **PL,** i.e., the sum of the proportions of all plasticizer **PL** in the acoustic composition is in the above cited ranges.

The acoustic damping material further comprises at least one wax **W.**

The term "wax" designates in the present disclosure substances that have a waxy consistency and have a melting temperature or melting temperature range of above normal room temperature, in particular above 25 °C.

Suitable waxes to be used as the at least one wax **W** include in particular synthetic waxes, for example, petroleum waxes, such as paraffin wax, petrolatum, and microcrystalline waxes, polyolefin waxes, polyethylene glycol waxes (Carbowax), amide waxes, and chemically modified waxes, such as hardened or hydrogenated waxes, for example, Montan ester waxes, as well as bio-based waxes, such as rice bran wax, beeswax, soya wax, and palm wax.

The term "polyolefin wax" designates in the present disclosure low molecular weight polymers of linear or branched α-olefins having from 2 to 30 carbon atoms and a number average molecular weight (Mₙ) in the range of 5000 - 25000 g/mol. They include both homopolymers and copolymers of the above mentioned linear or branched α-olefins.

Polyolefin waxes can be obtained by thermal decomposition of polyolefin plastics, in particular polyethylene plastic, or by direct polymerization of olefins. Suitable polymerization processes include, for example, free-radical processes, where the olefins, for example, ethylene, are reacted at high pressures and temperatures to give more or less branched waxes and processes, where ethylene and/or higher α-olefins, in particular propylene, are polymerized using metalorganic catalysts, for example Ziegler-Natta or metallocene catalysts, to give unbranched or branched waxes. The polyolefin waxes have generally at least partially crystalline structure.

The term "amide wax" designates in the present document waxes containing an amide bond (-CONH-) in the molecule or an amide group (-CONH₂) at the end of the molecule. Especially suitable amide waxes include N,N'-ethylenebis(stearoamide), stearic acid amide, N,N'-methylenebis(stearoamide),and methylolstearoamide.

In embodiments, the at least one wax **W** comprises or consists of at least one bio-based wax.

Preferably, the at least one bio-based wax has a bio-based carbon content determined by the radiocarbon method according to ASTM D 6866-12 (Method B) of at least 60 wt.-%, preferably 60 - 100 wt.-%, more preferably 75 - 100 wt.-%, based on the total carbon content of the at least one bio-based wax.

In embodiments, the at least one bio-based wax is selected from rice bran wax, beeswax, soy wax, and palm wax, preferably rice bran wax.

Such bio-based waxes are commercially available, for example from Hammonia Oleo and Evricom Ltd.

Preferably, the acoustic damping material comprises not more than 50 wt.-%, more preferably not more than 35 wt.-% and/or at least 0.5 wt.-%, more preferably at least 1.5 wt.-%, of the at least one plasticizer wax **W.**

In embodiments, the acoustic damping material comprises 0.5 - 20 wt.-%, preferably 1.5 - 15 wt.-%, more preferably 2.5 - 12.5 wt.-% of the at least one wax**W**.

The acoustic damping material further comprises at least one tackifying resin **TR.**

The term "tackifying resin" designates in the present disclosure resins that in general enhance the adhesion and/or tackiness of a composition. The term "tackiness" refers in the present document to the property of a substance of being sticky or adhesive by simple contact, which can be measured, for example, as a loop tack. Preferred tackifying resins are tackifying at a temperature of 25 °C.

Especially suitable tackifying resins for use as the at least one tackifying resin **TR** include, for example, synthetic resins, natural resins, and chemically modified natural resins.

The term "synthetic resin" designates in the present disclosure compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Suitable aliphatic monomers may include C₄, Cs, and C₆ paraffins, olefins, and conjugated diolefins. Examples of aliphatic monomers or cycloaliphatic monomers include butadiene, isobutylene, 1,3-pentadiene, 1,4-pentadiene, cyclopentane, 1-pentene, 2-pentene, 2-methyl-1-pentene, 2-methyl-2-butene, 2-methyl-2-pentene, isoprene, cyclohexane, 1- 3-hexadiene, 1-4-hexadiene, cyclopentadiene, and dicyclopentadiene. Examples of aromatic monomer include Cs, C₉, and C₁₀ aromatic monomers. Typical aromatic monomers include, styrene, alphamethyl styrene, vinyl toluene, methoxy styrene, tertiary butyl styrene, chlorostyrene, coumarone, and indene monomers including indene, and methyl indene, and combinations thereof.

Suitable synthetic resins include, for example, hydrocarbon resins, coumarone-indene resins, polyindene resins, polystyrene resins, vinyl toluene-alphamethyl styrene copolymer resins, and alphamethyl styrene resins.

The term "hydrocarbon resin" designates in the present disclosure synthetic resins made by polymerizing mixtures of unsaturated monomers obtained from petroleum-based feedstocks, such as by-products of cracking of natural gas liquids, gas oil, or petroleum naphthas. These types of hydrocarbon resins are also known as "petroleum resins" or as "petroleum hydrocarbon resins". The hydrocarbon resins include also pure monomer aromatic resins, which are prepared by polymerizing aromatic monomer feedstocks that have been purified to eliminate color causing contaminants and to precisely control the composition of the product.

Suitable hydrocarbon resins are commercially available, for example, under the trade name of Wingtack^{®}, Wingtack^{®} Plus, Wingtack^{®} Extra, and Wingtack^{®} STS (all from Cray Valley); under the trade name of Escorez^{®} 1000 series, Escorez^{®} 2000 series, and Escorez^{®} 5000 series (all from ExxonMobil Chemical); under the trade name of Novares^{®} T series, Novares^{®} TT series, Novares^{®} TD series, Novares^{®} TL series, Novares^{®} TN series, Novares^{®} TK series, and Novares^{®} TV series (all from RÜTGERS Novares GmbH); and under the trade name of Kristalex^{®}, Plastolyn^{®}, Piccotex^{®}, Piccolastic^{®} and Endex^{®} (all from Eastman Chemicals).

Suitable natural and chemically modified natural resins include, for example, rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable terpene resins include copolymers and terpolymers of natural terpenes, such as styrene/terpene and alpha methyl styrene/terpene resins; polyterpene resins generally resulting from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

The at least one tackifying resin **TR** preferably has a softening point determined by Ring and Ball measurement conducted according to EN 1238:2011 standard of not more than 175 °C, preferably not more than 165 °C, particularly in the range of 75 - 175 °C, especially 80- 165 °C.

In embodiments, the at least one tackifying resin **TR** comprises or consists of at least one bio-based tackifying resin.

Preferably, the at least one bio-based tackifying resin has a bio-based carbon content determined by the radiocarbon method according to ASTM D 6866-12 (Method B) of at least 60 wt.-%, preferably 60 - 100 wt.-%, more preferably 75 - 100 wt.-%, based on the total carbon content of the at least one bio-based tackifying resin.

In exemplary embodiments, the at least one bio-based tackifying resin is selected from rosin ester resins, phenolic modified rosin ester resins, and terpene resins.

Preferably, the acoustic damping material comprises not more than 50 wt.-%, more preferably not more than 35 wt.-% and/or at least 1.5 wt.-%, more preferably at least 5 wt.-%, of the at least one tackifying resin **TR.**

In embodiments, the acoustic damping material comprises 1.5 - 35 wt.-%, preferably 5 - 30 wt.-%, more preferably 10 - 25 wt.-%, of the at least one tackifying resin **TR.**

In exemplary embodiments, the at least one plasticizer **PL** comprises or consists of the at least one bio-based plasticizer and the at least one wax **W** comprises or consists of the at least one bio-based wax and/or the at least one tackifying resin **TR** comprises or consists of the at least one bio-based tackifying resin.

The acoustic damping material further comprises at least one thermoplastic polymer **TP.**

The term "thermoplastic" refers in the present disclosure to any material which can be melted and re-solidified with little or no change in physical properties. Various types of thermoplastic polymers, including crystalline, semi-crystalline, and amorphous polymers and thermoplastic elastomers are suitable for use as the at least one thermoplastic polymer **TP.**

Suitable polymers for use as the thermoplastic polymer **TP** include, for example, ethylene vinyl acetate copolymers, polyethylenes, propylene homopolymers and copolymers, and styrene block copolymers.

Especially suitable copolymers of ethylene and vinyl acetate (EVA) include those having a content of a structural unit derived from vinyl acetate in the range of 4 - 95 wt.-%, preferably 6-90 wt.-%, particularly 8 - 70 wt.-%, based on the weight of the copolymer. Particularly suitable ethylene vinyl acetate copolymers include ethylene vinyl acetate bipolymers and terpolymers, such as ethylene vinyl acetate carbon monoxide terpolymers.

These are commercially available, for example, under the trade name of Escorene^{®} (from Exxon Mobil), under the trade name of Primeva^{®} (from Repsol Quimica S.A.), under the trade name of Evatane^{®} (from Arkema Functional Polyolefins), under the trade name of Greenflex^{®} (from Eni versalis S.p.A.), and under the trade name of Levapren^{®} (from Arlanxeo GmbH).

Suitable polyethylenes include ethylene homopolymers and ethylene copolymers, preferably selected from the group consisting of low-density polyethylene (LDPE) or linear low-density polyethylene (LLDPE), or high-density polyethylene (HDPE), preferably linear low-density polyethylene (LLDPE).

Suitable propylene copolymers include, for example, propylene based elastomers, which are commercially available, for example, under the trade name of Versify^{®} (from Dow Chemical Company) and under the trade name of Vistamaxx^{®} (from Exxon Mobil).

Further suitable propylene copolymers include propylene-based thermoplastic olefin elastomers (TPE-O, TPO). TPOs are heterophase polyolefin compositions containing a high crystallinity base polyolefin and a low-crystallinity or amorphous polyolefin modifier. The heterophasic phase morphology consists of a matrix phase composed primarily of the base polyolefin and a dispersed phase composed primarily of the polyolefin modifier. Commercially available TPOs include reactor blends of the base polyolefin and the polyolefin modifier, also known as "in-situ TPOs" or "in-situ impact copolymers (ICP)", as well as physical blends of the aforementioned components. In case of a reactor-blend type of TPO, the components are typically produced in a sequential polymerization process, wherein the components of the matrix phase are produced in a first reactor and transferred to a second reactor, where the components of the dispersed phase are produced and incorporated as domains in the matrix phase. A physical-blend type of TPO is produced by melt-mixing the base polyolefin with the polyolefin modifier each of which was separately formed prior to blending of the components.

Reactor-blend type TPOs comprising polypropylene as the base polymer are often referred to as "heterophasic propylene copolymers" whereas reactor-blend type TPOs comprising polypropylene random copolymer as the base polymer are often referred to as "heterophasic propylene random copolymers". Depending on the amount of the polyolefin modifier, the commercially available heterophasic propylene copolymers are typically characterized as "in-situ impact copolymers" (ICP) or as "reactor-TPOs" or as "soft-TPOs". The main difference between these types of TPOs is that the amount of the polyolefin modifier is typically lower in ICPs than in reactor-TPOs and soft-TPOs, such as not more than 40 wt.-%, in particular not more than 35 wt.-%. Consequently, typical ICPs tend to have a lower xylene cold soluble (XCS) content determined according to ISO 16152 2005 standard as well as higher flexural modulus determined according to ISO 178:2010 standard compared to reactor-TPOs and soft-TPOs.

Suitable TPOs are commercially available, for example, under the trade name Hifax^{®}, Adflex^{®} and Adsyl^{®} (all from Lyondell Basell), such as Hifax^{®} CA 10A, Hifax^{®} CA 12A, and Hifax^{®} CA 212 A and under the trade name of Borsoft^{®} (from Borealis Polymers), such as Borsoft^{®} SD233 CF.

Furthermore, especially suitable styrene block copolymers include block copolymers containing polystyrene and polybutadiene blocks and/or polyisoprene blocks. These materials are generally available as pure triblock copolymers, also known as SIS and SBS block copolymers, and as diblock copolymers (SI and SB block copolymers). Styrene block copolymers are also commercially available as mixtures of diblock and triblock copolymers. Suitable styrene block copolymers can have a linear, radial, or star structure, the linear structure being especially preferred.

Suitable SI, SIS, SB, and SBS block copolymers are commercially available, for example from TSRC/Dexco under the trade name of Vector^{®}, such as Vector^{®} 7000-series, from Kraton Polymers under the trade name of Kraton^{®} D-series, and from Dynasol under the trade name of Calprene^{®}.

Preferably, the acoustic damping material comprises not more than 50 wt.-%, more preferably not more than 35 wt.-% and/or at least 0.5 wt.-%, more preferably at least 1.5 wt.-%, of the at least one thermoplastic polymer **TP.**

In embodiments, the acoustic damping material comprises 1.5 - 20 wt.-%, preferably 2.5 - 15 wt.-%, more preferably 3.5 - 12.5 wt.-% of the thermoplastic polymer **TP.**

In exemplary embodiments, the at least one thermoplastic polymer **TP** comprises at least one ethylene vinyl acetate copolymer **TP1,** preferably having a vinyl acetate content of 4 - 70 wt.-%, preferably 6 - 50 wt.-%, particularly 8-40 wt.-%, based on the weight of the copolymer.

In further exemplary embodiments, the at least one ethylene vinyl acetate copolymer comprises a first ethylene vinyl acetate copolymer **TP11** and a second ethylene vinyl acetate copolymer **TP12** different from the first ethylene vinyl acetate copolymer **TP11.**

In embodiments, the first ethylene vinyl acetate copolymer **TP11** has a melt flow index (MFI) determined according to ISO 1133 (190 °C/2.16 kg) of at least 75 g/10 min, preferably at least 100 g/10 min, more preferably at least 150 g/10 min and/or a vinyl acetate content of 4 - 70 wt.-%, preferably 6 - 50 wt.-%, more preferably 8 - 40 wt.-%, based on the weight of the copolymer and/or the second ethylene vinyl acetate copolymer **TP12** has a melt flow index (MFI) determined according to ISO 1133 (190 °C/2.16 kg) of not more than 50 g/10 min, preferably not more than 35 g/10 min, more preferably not more than 25 g/10 and/or a vinyl acetate content of 4 - 70 wt.-%, preferably 6 - 50 wt.-%, more preferably 8 - 40 wt.-%, based on the weight of the copolymer.

In embodiments, the at least one thermoplastic polymer **TP** comprises, in addition or instead of the at least one ethylene vinyl acetate copolymer **TP1,** at least one propylene copolymer **TP2.**

In embodiments, the at least one propylene copolymer **TP2** has a propylene content of at least 60 wt.-%, preferably at least 70 wt.-%, more preferably at least 75 wt.-%, based on the weight of the propylene copolymer **TP2.**

In exemplary embodiments, the at least one propylene copolymer **TP2** is a propylene-ethylene copolymer, preferably a propylene-ethylene random copolymer, preferably having an ethylene content of 5 - 20 wt.-%, more preferably 9 - 18 wt.-%, even more preferably 12 - 18 wt.-%, based on the weight of the propylene-ethylene copolymer.

Furthermore, the at least one propylene copolymer **TP2** may have:
- a flexural modulus at 23°C determined according to ISO 178:2019 standard of not more than 100 MPa, preferably not more than 75 MPa, more preferably not more than 65 MPa, even more preferably not more than 50 MPa and/or
- a melt flow rate (230°C/2.16 kg) determined according to ISO 1133 standard of not more than 50 g/10 min, preferably not more than 35 g/10 min, more preferably not more than 25 g/10 min, even more preferably not more than 20 g/10 min and/or
- a density at 23°C determined according to ASTM D-792 standard of 0.850 - 0.900 g/cm³, preferably 0.855 - 0.890 g/cm³.

In embodiments, the at least one thermoplastic polymer **TP** comprises, instead of or in addition to the at least one ethylene vinyl acetate copolymer **TP1** and the at least one propylene copolymer **TP2,** at least one styrene block copolymer **TP3.**

In embodiments, the at least one styrene block copolymer **TP3** is selected from styrene-isoprene (SI) block copolymers, styrene-isoprene-styrene (SIS) block copolymers, styrene-butadiene block copolymers, and styrene-butadiene-styrene (SBS) block copolymers.

In exemplary embodiments, the at least one styrene block copolymer **TP3** has:
- a polystyrene content of not more than 60 wt.-%, preferably not more than 55 wt.-%, more preferably not more than 50 wt.-% and/or
- a melt flow index determined according to ASTM D1238 (200 °C, 5 kg) of not more than 100 g/10 min, more preferably not more than 75 g/10 min, even more preferably not more than 50 g/10 min.

In embodiments, the at least one thermoplastic polymer **TP** comprises the at least one ethylene vinyl acetate copolymer **TP1** and the at least one propylene copolymer **TP2** and/or the at least one styrene block copolymer **TP3.**

The acoustic damping material further contains at least 15 wt.-%, preferably at least 25 wt.-% of at least one solid particulate filler **F.**

In embodiments, the acoustic damping material comprises 25 - 75 wt.-%, preferably 35 - 65 wt.-%, more preferably 40 - 60 wt.-% of the solid particulate filler **F.**

In exemplary embodiments, the at least one solid particulate filler **F** comprises at least one mineral filler **F1** and/or at least one cellulose-containing filler **F2,** preferably composed of wood particles.

The at least one mineral filler **F1** is preferably present in the acoustic damping material in form of fine particles, particularly, having a median particle size d₅₀ of not more than 100 µm, preferably not more than 50 µm.

The term "median particle size d₅₀" refers to a particle size below which 50 % of all particles by volume are smaller than the d₅₀ value. The particle size distribution may be measured, for example, by sieve analysis according to the method as described in ASTM C136/C136M -2014 standard ("Standard Test Method for Sieve Analysis of Fine and Coarse Aggregates).

In embodiments, the at least one mineral filler **F1** has a median particle size d₅₀ in the range of 0.1 - 100 µm, preferably 0.25 - 50 µm, more preferably 0.5 - 25 µm.

It may also be preferred that the mineral filler **F1** has a water-solubility of less than 0.1 g/100 g water, more preferably less than 0.05 g/100 g water, even more preferably less than 0.01 g/100 g water, at a temperature of 20 °C. The solubility of a compound in water can be measured as the saturation concentration, where adding more compound does not increase the concentration of the solution, i.e. where the excess amount of the substance begins to precipitate.

In embodiments, the at least one mineral filler **F1** is selected from the group consisting of calcium carbonate, magnesium carbonate, talc, kaolin, diatomaceous earth, wollastonite, feldspar, montmorillonite, dolomite, silica, cristobalite, mica, barium sulfate, graphite, ceramic spheres, hollow glass spheres, glass spheres.

It may be preferable that the acoustic damping material comprises several different mineral fillers, such as at least two different mineral fillers. Some of the mineral fillers may, for example, be used for improving the acoustic damping properties of the material whereas other may be used to enable adhering of the material to a metal substrate by magnetic force or for decreasing the weight of the material.

In embodiments, the acoustic damping material comprises:
- At least one first mineral filler **F11** and/or
- At least one second mineral filler **F12** different from the at least one first mineral filler **F11** and/or
- At least one third mineral filler **F13** different from the at least one first mineral filler **F11** and from the at least one second mineral filler **F12.**

Particularly, the at least one first solid mineral filler **F11** may have a median particle size d₅₀ in the range of 1 - 100 µm and/or an apparent density of at least 1.5 g/cm³ and/or a number average particle aspect ratio of not more than 2.5.

Generally, the density of particulate materials can be determined based on different definitions for the volume occupied by the particles of the material. A "true density" refers to the ratio of the mass and the "true volume" of a sample, excluding the volume of the open pores, closed pores, and the inter-particle voids. An "apparent density", also known as "skeletal density", is calculated based on the skeletal volume of the particles, excluding both the open pores and inter-particle voids. A "bulk density" of a powder material is calculated as the mass of the particles per unit volume after the particles have freely filled a standard container under specific conditions thus including the closed pores, open pores, and inter-particle voids. True density and apparent density can be measured using both gas and liquid displacement methods. In a gas displacement method, typically helium, gas is employed instead of liquid to measure the sample volume.

The term "aspect ratio" refers in the present disclosure to the value obtained by dividing the length of a particle by the thickness of the particle. The "length of a particle" refers in the present disclosure to the maximum Feret diameter (X_{Fe,max}), i.e. the longest Feret diameter out of the measured set of Feret diameters. The term "Feret diameter" refers in the present disclosure to the distance between two tangents on opposite sides of the particle, parallel to some fixed direction and perpendicular to the measurement direction. The "thickness of a particle" refers in the present disclosure to the minimum Feret diameter (X_{Fe,min}), i.e. the shortest Feret diameter out of the measured set of Feret diameters. The aspect ratio is, therefore, calculated as the ratio of X_{Fe,max} and X_{Fe,min}.

The aspect ratio of a particle can be determined by measuring the length and thickness of the particle using any suitable measurement technique, such as by using dynamic image analysis method conducted according to ISO 13322-2:2006 standard and calculating the aspect ratio from the measured dimensions of the particle as described above. The dimensions of particles can be measured with a dry dispersion method, where the particles are dispersed in air, particularly by using air pressure dispersion method. The measurements may be conducted using any type of dynamic image analysis apparatus, such as a Camsizer XT device (trademark of Retsch Technology GmbH).

The term "number average aspect ratio" refers in the present disclosure to the arithmetic average of the individual aspect ratios of the particles within a sample or collection or a statistically significant and representative random sample drawn from such a sample or collection. The number average aspect ratio of a particulate material can be determined by measuring the dimensions of individual particles of the sample using any suitable measurement technique, preferably by using dynamic image analysis method conducted according to ISO 13322-2:2006 standard and calculating the number average aspect ratio from the measured dimensions of the individual particles as described above.

Furthermore, the at least one second mineral filler **F12** may have a median particle size d₅₀ in the range of 250 - 1000 µm and/or an apparent density of not more than 1.0 g/cm³.

In addition, the at least one third mineral filler **F13** may have a median particle size d₅₀ of at least 100 µm and/or an apparent density of at least 1.5 g/cm³ and/or a number average particle aspect ratio of at least 3.0.

In embodiments, the at least one first mineral filler **F11** is selected from the group consisting of calcium carbonate, magnesium carbonate, talc, kaolin, wollastonite, feldspar, montmorillonite, dolomite, silica, cristobalite, iron oxide, iron nickel oxide, and strontium ferrite and/or the at least one second mineral filler **F12** is selected from the group consisting of hollow ceramic spheres, hollow glass spheres, hollow organic spheres, and glass spheres and/or the at least one third solid particulate filler **F13** is selected from the group consisting of mica, montmorillonite, slate, talc, barium sulfate, and graphite.

The at least one cellulose-containing filler **F2** may be used instead of the at least one mineral filler **F1,** particularly instead of the at least one third mineral filler **F13,** or in addition to the at least one mineral filler **F1,** particularly in addition to the at least one first **F11** and/or the at least one second **F12** mineral filler.

In embodiments, the at least one cellulose-containing filler **F2** contains at least 25 wt.-%, preferably at least 35 wt.-%, more preferably at least 40 wt.-% of cellulose, based on the total weight of the cellulose-containing filler **F2.**

In preferred embodiments, the at least one cellulose-containing filler **F2** is composed of wood particles. The term "wood particle" refers to particles composed of wood fibers. The length dimension of a wood particle is typically orientated parallel to the grain structure of the wood particle, i.e. parallel to the orientation of the long axis of the dominant fibers in the wood particle.

Suitable wood particles for use as the at least one cellulose-containing filler **F2** include, for example, all types of soft wood and hard wood particles.

The term "softwood" refers to wood from conifers, i.e. wood from needle-bearing trees from the order Pinales. Softwood-producing trees include, for example, pine, spruce, cedar, fir, larch, douglas-fir, hemlock, cypress, redwood, and yew. Conversely, the term "hardwood" refers to wood from broad-leaved or angiosperm trees, such as eucalyptus, maple, birch, beech, aspen, and the like. Softwoods contain two types of cells, longitudinal wood fibers (or tracheids) and transverse ray cells whereas hardwood trees contain pores or vessels. In softwood, water transport within the tree is via the tracheids rather than the pores of hardwoods.

In embodiments, the at least one cellulose-containing filler **F2** has:
- a median particle size d₅₀ in the range of 50 - 650 µm, preferably 75 - 550 µm, more preferably 100 - 450 µm, even more preferably 125 - 400 µm, still more preferably 150 - 350 µm, most preferably 175 - 300 µm and/or
- a d₉₀ particle size in the range of 150 - 1000 µm, preferably 175 - 750 µm, more preferably 200 - 550 µm, even more preferably 200 - 450 µm, most preferably 225 - 400 µm and/or
- a d₁₀ particle size in the range of 15 - 350 µm, preferably 35 - 250 µm, more preferably 55 - 200 µm, even more preferably 65 - 175 µm, most preferably 85 - 150 µm.

The at least one cellulose-containing filler **F2** may have an apparent density in the range of 0.25 - 1.5 g/cm³, preferably 0.30 - 1.25 g/cm³, more preferably 0.35 - 1.0 g/cm³, even more preferably 0.40 - 1.0 g/cm³.

Furthermore, the at least one cellulose-containing filler **F2** may have a true density in the range of 1.00 - 2.00 g/cm³, preferably 1.25 - 1.85 g/cm³, more preferably 1.35 - 1.75 g/cm³, even more preferably 1.40 - 1.70 g/cm³.

In embodiments, the at least one solid particulate filler **F** is composed of the at least one mineral filler **F1.**

In further embodiments, the at least one solid particulate filler **F** is composed of the at least one cellulose-containing filler **F2.**

In still further embodiments, the at least one solid particulate filler **F** comprises or is composed of the at least one mineral filler **F1** and the at least one cellulose-containing filler **F2,** wherein the weight ratio of the amount of the at least one mineral filler **F1** to the amount of the cellulose-containing filler **F2** in the acoustic damping material is in the range of from 10:1 to 1:1, preferably from 7:1 to 2:1, more preferably form 6:1 to 3:1.

The acoustic damping material may optionally contain one or more additives, which are customary for acoustic damping materials. Examples of suitable additives include, for example, pigments, thixotropic agents, thermal stabilizers, drying agents, and flame retardants. These additives, if used at all, preferably make up not more than 25 wt.-%, more preferably not more than 10 wt.-%, of the total weight of the acoustic damping material.

In embodiments, the acoustic damping material comprises less than 1.5 wt.-%, preferably less than 1.0 wt.-%, more preferably less than 0.5 wt.-%, still more preferably less than 0.1 wt.-%, of bitumen.

Another aspect of the present invention is use of the damping material as discussed above for damping of vibrations and/or noise in transportation vehicles or white goods.

A further aspect of the present invention is a damping element (1) comprising:
i) A damping layer (2) composed of the acoustic damping material as discussed above and
ii) Optionally an adhesive layer (3) covering at least a portion of an upper or lower major surface of the damping layer (2).

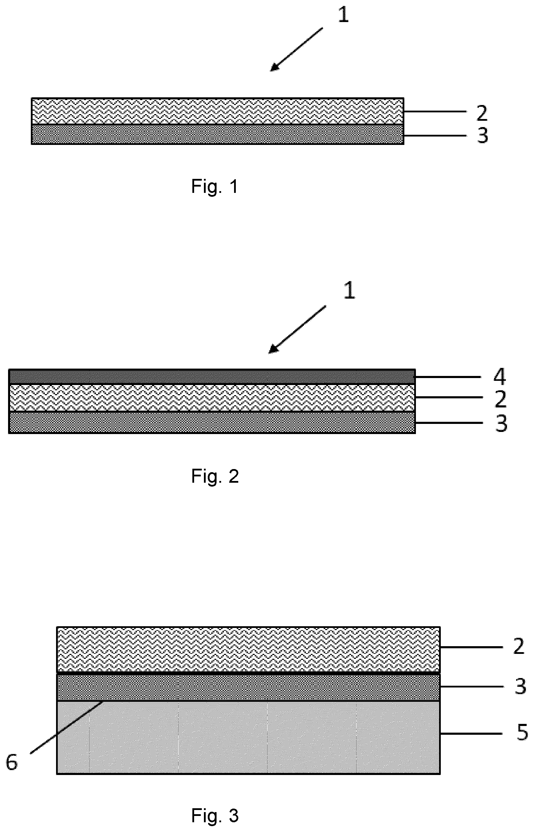

Such damping element is especially suitable for use in damping of undesired vibrations and noise in mechanical structures and components of manufactured articles, such as transportation vehicles or products of home appliance or general industry. A cross-section of an exemplary damping element is shown in figure 1.

The term "layer" refers in the present disclosure to a sheet-like element having upper and lower major surfaces ,a width defined between longitudinally extending edges, and a thickness defined between the upper and lower major surfaces. The term "thickness" refers to a dimension of a sheet-like element that is measured in a plane that is substantially perpendicular to the length and width dimensions of the element.

Particularly, the upper major surface of the damping layer may form one of the primary exterior surfaces of the damping element. The term "primary exterior surface" refers here to the outermost surfaces of the damping element.

In embodiments, the damping layer (2) has a maximum thickness of 0.5 - 15 mm, preferably 1-10 mm, more preferably 1.5 - 7.5 mm, even more preferably 1.5 - 5 mm and/or a density in the range of 0.5 - 5 g/cm³, preferably 0.75 - 4.5 g/cm³, more preferably 1 - 3 g/cm³, even more preferably 1 - 2.5 g/cm³.

Suitable adhesives for use in the adhesive layer (3) include, particularly, pressure sensitive adhesives and hot-melt adhesives. The term "pressure sensitive adhesive" is understood to include also pressure sensitive hot-melt adhesives (HM-PSA), which are heated and applied as a melt to a surface of a substrate.

Pressure sensitive adhesives (PSA) are viscoelastic materials, which adhere immediately to almost any kind of substrate by application of light pressure and which are permanently tacky.

Suitable pressure sensitive adhesives for the adhesive layer (2) include adhesives based on acrylic polymers, styrene block copolymers, amorphous polyolefins (APO), amorphous poly-α-olefins (APAO), vinyl ether polymers, or elastomers such as, for example, butyl rubber, rubber like ethylene vinyl acetate copolymer, natural rubber, nitrile rubber, silicone rubber, and ethylene-propylene-diene rubber. In addition to the above mentioned polymers, the pressure sensitive adhesives typically comprise one or more additional constituents including, for example, tackifying resins, waxes, and plasticizers as wells as one or more additives such as, for example, UV-light absorption agents, UV- and heat stabilizers, optical brighteners, pigments, dyes, and desiccants.

Hot-melt adhesives are solvent free adhesives, which are solid at room temperature and which are applied to the substrate to be bonded in form of a melt. After cooling the adhesive solidifies and forms an adhesive bond with the substrate through physically and/or chemically occurring bonding. Suitable hot-melt adhesives include, for example, polyolefin-based hot-melt adhesives, in particular those based on amorphous polyolefins (APO) and amorphous poly-alpha-olefins (APAO), thermoplastic copolymer-based hot-melt adhesives, in particular those comprising copolymers ethylene and vinyl acetate (EVA) or polyamide as the main polymer component, and polyurethane-based hot-melt adhesives. In addition to the above mentioned polymers, suitable hot-melt adhesive compositions typically comprise one or more additional constituents including, for example, resins and waxes as well as one or more additives such as, for example, UV-light absorption agents, UV- and heat stabilizers, optical brighteners, pigments, dyes, and desiccants.

In embodiments, the damping element further comprises a constraining layer. In case the damping element comprises an adhesive layer, the constraining layer is situated on the side of the damping layer that is opposite to the adhesive layer, i.e. the damping layer is sandwiched between the adhesive layer and the constraining layer. Damping elements according to this embodiment are generally known as "constrained layer dampers".

A cross-section of a damping element comprising a damping layer (2), an adhesive layer (3), and a constraining layer (4) is shown in figure 2.

In exemplary embodiments, the constraining layer is a metal sheet, preferably aluminum or steel sheet or a polymeric sheets, preferably glass fiber reinforced polymer sheet. The thickness of the constraining layer is not particularly restricted but the use of constraining layers that are thinner than the damping layer may be preferred. Preferred thickness also depends on the material of the constraining layer. In some embodiments, the constraining layer has a thickness of 0.05 - 1.5 mm, preferably 0.1 - 1.25 mm, more preferably 0.1 - 1.0 mm. In one exemplary embodiment, the constraining layer is a metal sheet having a thickness of 0.05 - 0.5 mm, preferably 0.05 - 0.4 mm or a polymeric sheet having a thickness of 0.1 - 1.2 mm, preferably 0.25 - 1.0 mm.

Especially the constraining layer may have an elastic modulus, which is higher than that of the damping layer, such larger by at least the factor 3, preferably at least the factor 5, more preferably at least a factor of 10, wherein the elastic modulus is measured by using the method as defined in ISO 6892-1:2016 standard (for metallic sheets) or as defined in ISO 527-2 standard (for polymeric sheets).

Another aspect of the present invention is a method for producing a damping element as discussed above, the method comprising steps of:
i) Providing damping layer composed of the acoustic damping material of the present invention,
ii) Optionally applying an adhesive composition to an upper or lower major surface of the damping layer, and
iii) Optionally cutting the composite element provided in step i) or ii) to a pre-determined length and/or width.

The damping layer can be provided by mixing the constituents of the acoustic damping material at an elevated temperature until a homogeneously mixed mixture is obtained followed by processing the homogeneously mixed mixture into a form of a shaped article.

The term "homogeneously mixed mixture" refers in the present disclosure to compositions, in which the individual constituents are distributed substantially homogeneously in the composition. Furthermore, a homogeneously mixed mixture can be multi-phase mixture. For example, a homogeneously mixed mixture of a polymer component and a filler component, therefore, refers to composition in which the constituents of the filler phase are homogeneously/uniformly distributed in the polymer phase. For a person skilled in the art it is clear that within such mixed compositions there may be regions formed, which have a slightly higher concentration of one of the constituents than other regions and that a 100 % homogeneous distribution of all the constituents is generally not achievable. Such mixed compositions with "imperfect" distribution of constituents, however, are also intended to be included by the term "homogeneously mixed mixture" in accordance with the present invention.

Any conventional type of a mixing apparatus can be used for mixing of the constituents of the acoustic damping material. The mixing step can be conducted as a batch process using a conventional batch-type mixer, such as a Dreis mixer, a Brabender mixer, a Banbury mixer, or a roll mixer or as a continuous process using a continuous-type mixer, such as an extruder, in particular a single-, a twin-screw extruder or a planetary roller extruder. It may be advantageous to heat the constituents before or during mixing, either by applying external heat sources or by friction generated by the mixing process itself, in order to facilitate processing of the constituents into a homogeneously mixed mixture by decreasing viscosities and/or melting of individual constituents.

The homogeneously mixed mixture of the constituents of the acoustic damping material can subsequently be processed into a form of a shaped article by using any conventional techniques, such as extruding, blow-molding, injection molding, compression molding, calendering, or hot-pressing techniques.

The adhesive composition can be applied to a surface of the damping layer using any conventional techniques in step ii) of the method. The details of the application step depend on the type of the adhesive composition. For example, the adhesive composition can be applied on the surface of the sheet by nozzle extrusion, powder dispersion, hot-melt calendaring, or by spray lamination techniques. In case of a hot-melt adhesive or a hot-melt pressure sensitive adhesive, the adhesive composition is first heated to an elevated application temperature above the softening point (Tₛ) of the adhesive before being applied to the surface of the damping layer.

Step iii) of the method for producing a damping element can be conducted, for example, by punch or die cutting.

Another aspect of the present invention is use of the damping element of the present invention for damping of vibrations and/or noises of structures in transportation vehicles or white goods or for baffling and/or reinforcing of structures in transportation vehicles.

Still another aspect of the present invention is a method for preparing a vibration and/or noise damped system comprising a structure having a noise emitting surface, the method comprising steps of:
I) Providing a damping element of the present invention,
II) Applying the damping element to the noise emitting surface.

In embodiments, the structure having a noise emitting surface is part of a transportation vehicle or a white good.

In some embodiments, the damping element comprises a damping layer and an adhesive layer covering at least a portion of an upper or lower major surface of the damping layer and step II) of the method comprises:
IIa) Contacting the outer major surface of the adhesive layer with the noise emitting surface and applying sufficient pressure to form an adhesive bond between the noise emitting surface and the damping layer or
IIb) Heating the adhesive layer and/or the substrate and contacting the outer major surface of the adhesive layer with the noise emitting surface and forming an adhesive bond between the noise emitting surface and the damping layer by cooling of the adhesive layer.

The term "outer major surface" of the adhesive layer refers to the major surface of the adhesive layer facing away from the damping layer.

Still another aspect of the present invention is a vibration and/or noise damped system comprising a structure (5) having a noise emitting surface (6) and a damping element (1) as discussed above, wherein least a portion of the damping layer (2) is adhered to the noise emitting surface (6), and wherein said structure (5) having the noise emitting surface (6) is preferably part of a transportation vehicle or a white good.

In embodiments, the damping layer (2) is adhered to the noise emitting surface (6) via an adhesive layer (3). A cross-section of such vibration and/or noise damped system is shown in figure 3.

### Examples

The followings products shown in Table 1 were used in the examples.

**Table 1**

| **Name** | **Chemical description** | **Supplier** |
|---|---|---|
| Shell Catanex^{®} SL 1990 | Paraffinic process oil | Shell |
| Sasolwax^{®} 7835 | Microcrystalline wax | Sasol |
| Viva-B-Fix^{®} 10247 | Bio-based process oil, kinematic viscosity @40 °C 96 mm²/s (EN ISO 3104) | H&R |
| Herwemag^{®} CO | Refined oil won from the seeds of Rici nus communis L. | Herwe |
| Herwemag^{®} EPO 65-1 | UVCB substance (vegetal origin) of variable composition, obtained by epoxidation of fatty acids triglycerides of Soybean | Herwe |
| Rice wax | Rice wax of fatty acid esters | Hammonia Oleo |
| Kraton^{®} D1119 | Linear triblock copolymer based on styrene and isoprene with a polystyrene content of 22 % | Kraton |
| Primeva^{®} 28400 | Ethylene vinyl acetate copolymer, vinyl acetate content 28 wt.-% | Entec Polymers |
| Primeva^{®} P1340 | Ethylene vinyl acetate copolymer, vinyl acetate content 12.5 wt.-% | Entec Polymers |
| Vistamax^{®} 6102 | Propylene-ethylene copolymer, ethylene content 16 wt.-% | Exxon Mobil |
| Plastolyn^{®} R1140 | Amorphous, low molecular weight hydrocarbon resin derived from aromatic petrochemical feedstocks, Ring and Ball Softening Point 139 °C (ASTM E 28) | Synthomer |
| I-Marv^{®} P-140 | Hydrogenated petroleum resin, softening point 140 °C (JIS K 2207) | Idemitsu |
| Sylvatac^{®} RE85 | Glycerol ester of Tall Oil rosin, softening point 80-85 °C | Kraton |
| Sylvares^{®} 1150 | Terpene phenolic resin, softening point 145-155 °C | Kraton |
| Colophonium resin | Mixture of resin acids | Hammonia Oleo |
| Bremazit 3050 | Zinc salt of rosin | Kraemer |
| Chalk powder | Calcium carbonate | Gebr. Zimmermann GmbH |
| Mica | Mica 20 Mesh | Normag GmbH |
| Wood particles 0.2 | Wood flour, d₅₀ particle size 170-220 µm | Krzysztof Pacyga |
| Wood particles 0.4 | Wood flour, d₅₀ particle size 370-420 µm | Krzysztof Pacyga |
| Dicaperl^{®} H900 | Perlite microspheres | Dicalite |
| Additives | Pigments,thermal stabilizers, rheology additives | |
| CaO | Calcium oxide, drying agent | Schaefer Kalk GmbH & Co.KG |

### Preparation of damping layers

Damping layers having the compositions of Table 2 were prepared according to the following procedure.

In a first step, plasticizer, wax, thermoplastic polymers, and tackifying resins were mixed in a batch type mixer until a homogeneously mixed mixture was obtained. After this, the remaining components of the damping material were added and the mixing was continued until a homogeneously mixed mixture was obtained. The thus obtained mixture was processed into sheets having a thickness of ca. 2.1 mm by using a conventional calendering apparatus.

### Measurement of density

The densities of the prepared damping layers were measured according to EN ISO 1183-1:2019 standard using a water immersion method (Archimedes principle) in deionized water and a precision balance to measure the mass of the test specimens.

### Heat resistance

The heat resistance test at 160 °C was performed according to the BMW group standard, Adhesives and sealing materials used in the body shop Damping pad, Requirements and testing, GS 97028-16:2012-02 page 4, Table 1: Resistance to high temperature ("Wärmetest"), AA-0415, edition 2018-10. The test samples had a length / width of 16 cm x 7 cm.

### Loss factor

Test specimens having suitable dimensions were obtained from the previously prepared damping layers by cutting or die cutting. One of the major surfaces of each test specimen was coated with a layer of pressure sensitive acrylate-based adhesive. The adhesive layer had a thickness of 50 µm.

The loss factors for the test specimen were determined by using the measurement method as defined in ISO 6721 standard. The measurements were conducted using a commercially available loss factor tester at a temperature in the range of from -20 to 60 °C. The values of the loss factor at the frequency of 200 Hz were obtained from the measured values of the loss factor value by mathematical means.

Measured values obtained with reference and exemplary damping layers are shown in Table 3.

**Table 2**

| **Compositions [pbw]** | **Ref-1** | **Ex-1** | **Ex-2** | **Ex-3** | **Ex-4** | **Ex-5** | **Ex-6** | **Ex-7** | **Ex-8** | **Ex-9** | **Ex-10** |
|---|---|---|---|---|---|---|---|---|---|---|---|
| Öl Shell Catanex SL 1990 | 550 | 550 | 0.00 | 0.00 | 5.50 | 0.00 | 0.00 | 0.00 | 0.00 | 0.00 | 0.00 |
| Sasolwax 7835 | 5.50 | 0.00 | 0.00 | 0.00 | 5.50 | 0.00 | 0.00 | 0.00 | 0.00 | 5.50 | 0.00 |
| Viva-B-Fix 10247 | 0.00 | 0.00 | 0.00 | 0.00 | 0.00 | 700 | 7.00 | 600 | 600 | 5.50 | 7.00 |
| Herwemag CO | 0.00 | 0.00 | 5.50 | 0.00 | 0.00 | 0.00 | 0.00 | 0.00 | 0.00 | 0.00 | 0.00 |
| Herwemag EPO | 0.00 | 0.00 | 0.00 | 5.50 | 0.00 | 0.00 | 0.00 | 0.00 | 0.00 | 0.00 | 0.00 |
| Rice wax | 0.00 | 5.50 | 5.50 | 5.50 | 0.00 | 500 | 500 | 7.00 | 700 | 0.00 | 500 |
| Kraton D1119 | 0.00 | 0.00 | 0.00 | 0.00 | 0.00 | 1.50 | 1.50 | 1.50 | 1.50 | 0.00 | 1.50 |
| Primeva 28400 | 2.50 | 250 | 2.50 | 2.50 | 2.50 | 2.50 | 2.50 | 2.50 | 2.50 | 2.50 | 2.50 |
| Primeva P1340 | 100 | 100 | 1.00 | 1.00 | 100 | 100 | 1.00 | 1.00 | 100 | 100 | 1.00 |
| Vistamax 6102 | 3.50 | 3.50 | 3.50 | 3.50 | 3.50 | 3.50 | 3.50 | 3.50 | 5.00 | 3.50 | 3.50 |
| Plastolyn R1140 | 17.00 | 17.00 | 17.00 | 17.00 | 0.00 | 17.00 | 0.00 | 1000 | 10.00 | 17.00 | 17.00 |
| I-Marv P-140 | 0.00 | 0.00 | 0.00 | 0.00 | 0.00 | 0.00 | 17.00 | 0.00 | 0.00 | 0.00 | 0.00 |
| Sylvatac RE85 | 0.00 | 0.00 | 0.00 | 0.00 | 0.00 | 0.00 | 0.00 | 7.00 | 0.00 | 0.00 | 0.00 |
| Sylvares 1150 | 0.00 | 0.00 | 0.00 | 0.00 | 0.00 | 0.00 | 0.00 | 0.00 | 700 | 0.00 | 0.00 |
| Colophonium resin | 0.00 | 0.00 | 0.00 | 0.00 | 0.00 | 0.00 | 0.00 | 0.00 | 0.00 | 0.00 | 0.00 |
| Bremazit 3050 | 000 | 0.00 | 0.00 | 0.00 | 17.00 | 0.00 | 0.00 | 0.00 | 0.00 | 0.00 | 0.00 |
| Kalksteinmehl | 23.10 | 23.10 | 23.10 | 23.10 | 23.10 | 23.10 | 23.10 | 23.10 | 22.60 | 23.10 | 23.10 |
| Mica | 2300 | 2300 | 2300 | 2300 | 2300 | 2300 | 2300 | 2300 | 22.50 | 2300 | 2300 |
| Wood particles 0.2 | 6.50 | 6.50 | 6.50 | 6.50 | 6.50 | 0.00 | 0.00 | 0.00 | 0.00 | 6.50 | 5.50 |
| Wood particles 0.4 | 6.50 | 6.50 | 6.50 | 6.50 | 6.50 | 0.00 | 0.00 | 0.00 | 0.00 | 6.50 | 5.50 |
| Dicaperl H900 | 0.00 | 0.00 | 0.00 | 0.00 | 0.00 | 11.00 | 11.00 | 11.00 | 10.00 | 0.00 | 0.00 |
| Additives | 3.40 | 3.40 | 3.40 | 3.40 | 3.40 | 3.40 | 3.40 | 3.40 | 3.40 | 3.40 | 3.40 |
| CaO | 250 | 250 | 2.50 | 2.50 | 2.50 | 200 | 200 | 200 | 1.50 | 2.50 | 200 |
| **Total** | 100.00 | 100.00 | 100.00 | 100.00 | 100.00 | 100.00 | 100.00 | 101.00 | 100.00 | 100.00 | 100.00 |

**Table 3**

| **Properties** | **Ref-1** | **Ex-1** | **Ex-2** | **Ex-3** | **Ex-4** | **Ex-5** | **Ex-6** | **Ex-7** | **Ex-8** | **Ex-9** | **Ex-10** |
|---|---|---|---|---|---|---|---|---|---|---|---|
| Density [g/cm³] | 1.27 | 1.40 | 1.40 | 1.40 | 1.40 | 1.42 | 1.45 | 0.00 | 1.40 | 1.40 | 1.37 |
| Area weight [kg/m²] | 3.13 | 3.18 | 3.18 | 3.07 | 3.07 | 3.14 | 3.09 | 3.00 | 3.00 | 3.15 | 3.10 |
| Thickness at room temperature [mm] | 2.10 | 2.17 | 2.20 | 2.20 | 2.10 | 2.15 | 2.05 | 2.00 | 2.05 | 2.15 | 2.20 |
| Heat resistance (30 min 160°C) @ ec sheet | Ok | Ok | Ok | Ok | Ok | Ok | Ok | Ok | Ok | Ok | Ok |
| Loss factor @T [°C] (200 Hz) | | | | | | | | | | | |
| 60 | 0.017 | 0.05 | 0.09 | 0.06 | 0.04 | 0.03 | 0.02 | 0.02 | 0.03 | 0.02 | 0.03 |
| 50 | 0.033 | 0.09 | 0.12 | 0.08 | 0.06 | 0.05 | 0.04 | 0.03 | 0.06 | 0.03 | 0.05 |
| 40 | 0.088 | 0.14 | 0.16 | 0.11 | 0.09 | 0.10 | 0.07 | 0.07 | 0.09 | 0.08 | 0.09 |
| 30 | 0.14 | 0.17 | 0.17 | 0.15 | 0.14 | 0.15 | 0.12 | 0.13 | 0.16 | 0.13 | 0.13 |
| 20 | 0.143 | 0.16 | 0.11 | 0.20 | 0.16 | 0.16 | 0.15 | 0.15 | 0.20 | 0.13 | 0.14 |
| 10 | 0.11 | 0.12 | 0.06 | 0.15 | 0.13 | 0.14 | 0.15 | 0.13 | 0.16 | 0.12 | 0.12 |
| 0 | 0.072 | 0.08 | 0.04 | 0.08 | 0.07 | 0.10 | 0.11 | 0.10 | 0.10 | 0.08 | 0.10 |
| -10 | 0.033 | 0.05 | 0.03 | 0.04 | 0.05 | 0.07 | 0.08 | 0.07 | 0.06 | 0.06 | 0.07 |
| -20 | 0.029 | 0.03 | 0.03 | 0.03 | 0.04 | 0.04 | 0.05 | 0.05 | 0.03 | 0.04 | 0.05 |

## Claims

1. An acoustic damping material comprising:
a) At least one thermoplastic polymer **TP**,
b) At least one plasticizer **PL,**
c) At least one tackifying resin **TR**,
d) At least one wax **W,**
e) At least 15 wt.-%, preferably at least 25 wt.-% of at least one solid particulate filler **F**,
wherein the at least one plasticizer **PL** comprises at least one bio-based plasticizer and/or the at least one tackifying resin **TR** comprises at least one bio-based tackifying resin and/or the at least one wax **W** comprises at least one bio-based wax.

2. The acoustic damping material according to claim 1 or 2, wherein the at least one bio-based plasticizer has a bio-based carbon content determined by the radiocarbon method according to ASTM D 6866-12 standard of at least 60 wt.-%, preferably 60 - 100 wt.-%, more preferably 75 - 100 wt.-%, based on the total carbon content of the bio-based plasticizer.

3. The acoustic damping material according to any one of previous claims, wherein the at least one bio-based plasticizer has a pour point determined according to EN ISO 3016 standard of at or below 0 °C, preferably at or below -10 °C and/or a kinematic viscosity at 40 °C determined according to ISO 3104 of 15 - 1000 mm²/s, preferably 30 - 500 mm²/s and/or a density at 15 °C determined according to DIN 51757 method 3 of 800 - 900 kg/m³, preferably 815 - 875 kg/m³.

4. The acoustic damping material according to any one of previous claims, wherein the at least one bio-based plasticizer contains isoalkanes.

5. The acoustic damping material according to any one of previous claims, wherein the at least one bio-based plasticizer has a weight average molecular weight (M_{w}) determined by gel permeation-chromatography (GPC) using polystyrene as standard of 200 - 10000 g/mol, preferably 300 - 5000 g/mol.

6. The acoustic damping material according to any one of previous claims comprising 0.5 - 20 wt.-%, preferably 1.5 - 15 wt.-% of the at least one plasticizer **PL.**

7. The acoustic damping material according to any one of previous claims, wherein the at least one bio-based wax has a bio-based carbon content determined by the radiocarbon method according to ASTM D 6866-12 standard of at least 60 wt.-%, preferably 60 - 100 wt.-%, more preferably 75 - 100 wt.-%, based on the total carbon content of the bio-based wax.

8. The acoustic damping material according to any one of previous claims comprising 0.5 - 20 wt.-%, preferably 1.5 - 15 wt.-% of the at least one wax **W.**

9. The acoustic damping material according to any one of previous claims, wherein the at least one bio-based tackifying resin has a bio-based carbon content determined by the radiocarbon method according to ASTM D 6866-12 standard of at least 60 wt.-%, preferably 60 - 100 wt.-%, more preferably 75 - 100 wt.-%, based on the total carbon content of the bio-based tackifying resin.

10. The acoustic damping material according to any one of previous claims comprising 1.5 - 35 wt.-%, preferably 5-30 wt.-% of the at least one tackifying resin **TR**.

11. The acoustic damping material according to any one of previous claims, wherein the at least one plasticizer **PL** comprises or consists of the at least one bio-based plasticizer.

12. The acoustic damping material according to any one of previous claims, wherein the at least one plasticizer **PL** comprises or consists of the at least one bio-based plasticizer and the at least one wax **W** comprises or consists of the at least one bio-based wax and/or the at least one tackifying resin **TR** comprises or consists of the at least one bio-based tackifying resin.

13. The acoustic damping material according to any one of previous claims, wherein the at least one thermoplastic polymer **TP** is selected from ethylene vinyl acetate copolymers, polyethylenes, propylene homopolymers and copolymers, and styrene block copolymers.

14. The acoustic damping material according to any one of previous claims comprising 1.5 - 20 wt.-%, preferably 2.5 - 15 wt.-% of the at least one thermoplastic polymer **TP.**

15. The acoustic damping material according to any one of previous claims comprising 25 - 75 wt.-%, preferably 35 - 65 wt.-% of the at least one solid particulate filler **F**, preferably comprising at least one mineral filler **F1** and/or at least one cellulose-containing filler **F2,** preferably composed of wood particles.

16. A damping element (1) comprising:
i) A damping layer (2) composed of the acoustic damping material according to any one of claims 1-15 and
ii) Optionally an adhesive layer (3).

17. A method for preparing a vibration and/or noise damped system comprising a structure having a noise emitting surface, the method comprising steps of:
I) Providing a damping element according to claim 16,
II) Applying the damping element to the noise emitting surface.

18. A vibration and/or noise damped system comprising a structure (5) having a noise emitting surface (6) and a damping element (1) according to claim 16, wherein least a portion of the damping layer (2) is adhered to the noise emitting surface (6), and wherein said structure (5) having the noise emitting surface (6) is preferably part of a transportation vehicle or a white good.
